# EUROPÄISCHE PATENTSCHRIFT

(11) **EP 2 864 153 B1**
(45) Veröffentlichungstag und Bekanntmachung des Hinweises auf die Patenterteilung: **30.09.2015**
(21) Anmeldenummer: 13736792.6
(22) Anmeldetag: 21.06.2013
(51) Int. Cl.: B60N 2/04, B60N 2/28, B60N 2/02, B60N 2/30, B60N 2/36

(54) **FAHRZEUGSITZ MIT BODENSTELLUNG**
VEHICLE SEAT HAVING A FLOOR POSITION
SIEGE DE VEHICULE POUVANT ÊTRE MIS EN POSITION ESCAMOTÉE

(30) Priorität: 26.06.2012 DE 102012012851; 23.08.2012 DE 102012016918
(43) Veröffentlichungstag der Anmeldung: 29.04.2015
(73) Patentinhaber: Johnson Controls Components GmbH & Co. KG, 67657 Kaiserslautern (DE)
(72) Erfinder: MARKEL, Christian, 55232 Alzey (DE)
(74) Vertreter: Liedhegener, Ralf
(86) Internationale Anmeldenummer: PCT/EP2013/062965
(87) Internationale Veröffentlichungsnummer: WO 2014/001209

(56) Entgegenhaltungen:
- EP-B1- 0 626 290
- DE-A1- 10 331 611
- JP-A- 2002 211 287
- US-A1- 2007 108 832
- US-A1- 2010 156 165

## Beschreibung

Die Erfindung betrifft einen Fahrzeugsitz mit den Merkmalen des Oberbegriffs des Anspruchs 1.

### Stand der Technik

Aus der EP 0 626 290 B1 ist ein gattungsgemäßer Fahrzeugsitz bekannt, mit einem Unterbau und einer am Unterbau gelenkig angebrachten Lehne, wobei der Fahrzeugsitz durch Vorklappen der Lehne von einer Sitzstellung in eine Bodenstellung überführbar ist und zur Anlenkung der Lehne am Unterbau auf beiden Sitzaußenseiten jeweils eine erste Schwinge und eine zweite Schwinge vorgesehen sind, wobei der Unterbau, die erste Schwinge, die Lehne und die zweite Schwinge als vier über Gelenke miteinander verbundene Getriebeglieder ein Viergelenk definieren. Dieser Fahrzeugsitz weist kein Kindersitzbefestigungssystem auf, das unabhängig vom Fahrzeuggurtsystem genutzt werden kann. Solche Kindersitzbefestigungssysteme sind beispielsweise unter dem Namen ISOFIX bekannt und umfassen fahrzeugsitzseitig zwei untere Anbindungspunkte, die im Übergangsbereich zwischen Sitzkissen und Sitzlehne im Abstand von 280mm zueinander angeordnet sind. An diesen beiden unteren Anbindungspunkten werden Klinkensysteme des Kindersitzbefestigungssystems, sogenannte Konnektoren, befestigt. Optional umfasst das Kindersitzbefestigungssystem zusätzlich einen dritten Anbindungspunkt zur Befestigung eines sogenannten Toptether-Gurtbandes des Kindersitzes. Der auf den Fahrzeugsitz aufgesetzte Kindersitz wird an den ISOFIX-Anbindungspunkten befestigt, ohne das Fahrzeuggurtsystem zu nutzen. Insbesondere die zulässige Lage der Anbindungspunkte des ISOFIX-Systems ist durch die Norm ISO 13216 standardisiert.

Die DE 101 56 644 C2 offenbart ebenfalls einen Fahrzeugsitz mit einer Viergelenkanbindung einer Lehne an einen Unterbau. Ein Kindersitzbefestigungssystem ist für diesen Fahrzeugsitz jedoch nicht vorgesehen, so dass dieser Fahrzeugsitz nur eingeschränkt zum Transport von Kindern geeignet ist, nämlich nur in Kombination mit Kindersitzen, die mit dem Fahrzeuggurtsystem genutzt werden können.

Eine ein Kindersitzbefestigungssystem aufnehmende Quertraverse, die über ein Beschlagunterteil eines Lehnenbeschlages fest mit der Unterbaustruktur eines Fahrzeugsitzes verbunden ist, offenbart die DE 10 2004 004 376 B3. Eine solche Anbindung lässt sich nicht einfach auf Fahrzeugsitze übertragen, die keinen Lehnenbeschlag aufweisen oder deren Lehnenbeschläge deutlich oberhalb der Anbindungspunkte des Kindersitzbefestigungssystems liegen. Dies ist häufig bei Fahrzeugsitzen der Fall, deren Lehne über ein Viergelenk an einem Unterbau gelenkig angebunden ist.

Aus der JP 2010 100 229 A ist ein zwischen Karosserieadaptern einer Lehne verlaufendes Querrohr bekannt, an dem Anbindungspunkte eines Kindersitzbefestigungssystems vorgesehen sind.

Aus der JP 2002 211 287 A ist ein zwischen der Lehne und dem Sitzkissen eines Fahrzeugsitzes verlaufendes und an Lehne oder Sitzkissen angebundenes Querholz bekannt, an dem mindestens ein Anbindungspunkt eines Kindersitzbefestigungssystems vorgesehen ist.

### Aufgabe

Der Erfindung liegt die Aufgabe zu Grunde, ein universelles Kindersitzbefestigungssystem für einen Fahrzeugsitz der eingangs genannten Art zur Verfügung zu stellen und derart in die Sitzstruktur zu integrieren, dass diese im Crashfall möglichst gering belastet wird.

### Lösung

Diese Aufgabe wird erfindungsgemäß durch einen Fahrzeugsitz mit den im Anspruch 1 genannten Merkmalen gelöst.

Dadurch, dass zwischen den beiden zweiten Schwingen ein Querrohr in Fahrzeugquerrichtung verläuft, das Querrohr zwei Enden aufweist und jedes dieser beiden Enden jeweils in einem Bereich zwischen dem zweiten Gelenk und dem dritten Gelenk an der zugehörigen zweiten Schwinge befestigt ist, wobei an dem Querrohr mindestens ein Anbindungspunkt eines Kindersitzbefestigungssystems vorgesehen ist, wird die im Crashfall auf den Kindersitz wirkende Crashkraft über die zweiten Schwingen auf direktem Weg in den Unterbau des Fahrzeugsitzes eingeleitet und belastet die Lehne und die Verriegelung des Viergelenks des Fahrzeugsitzes nicht oder nur wenig.

Vorzugsweise sind an dem Querrohr zwei untere Anbindungspunkte eines ISOFIX-Kindersitzbefestigungssystems vorgesehen, um den Fahrzeugsitz mit einem genormten ISOFIX-Kindersitz verbinden zu können. Eine besonders kostengünstige Lösung ist gegeben, wenn die beiden unteren Anbindungspunkte als im Wesentlichen U-förmige Bügel, insbesondere aus gebogenem Draht ausgebildet sind. Bevorzugt umfasst dann jeder dieser beiden unteren Bügel einen parallel zur Fahrzeugquerrichtung y verlaufenden Konnektoraufnahmeabschnitt, der mittels zweier Armabschnitte mit zwei insbesondere kreisbogenförmigen Endabschnitten verbunden ist, die an dem Querrohr befestigt sind. Die kreisbogenförmigen Endabschnitte sind dabei idealerweise so gestaltet, dass sie das Querrohr formschlüssig umgreifen und dadurch einem Lösen unter Belastung entgegen wirken.

Ein dritter Anbindungspunkt, insbesondere für einen Toptether eines ISOFIX-Kindersitzbefestigungssystems, kann zusätzlich an dem Querrohr vorgesehen sein. Durch die Befestigung des dritten Anbindungspunktes an dem Querrohr wird insbesondere die Lehnenstruktur von den Kräften der Toptether-Anbindung entlastet. Vorzugsweise ist der dritte Anbindungspunkt kostengünstig als ein dritter, im Wesentlichen U-förmiger, Bügel, insbesondere aus gebogenem Draht, ausgebildet.

Hinsichtlich der Festigkeit des Fahrzeugsitzes ist erfindungsgemäß ein Querrohr mit zwei Enden vorgesehen, die jeweils in einem Bereich zwischen einem zweiten Gelenk und einem dritten Gelenk des Viergelenks an jeweils einer der beiden zweiten Schwingen befestigt sind. Darüber hinaus ist erfindungsgemäß vorgesehen, dass das zweite Gelenk den Unterbau mit der zweiten Schwinge und das dritte Gelenk die Lehne mit der zweiten Schwinge drehbar verbindet und dass jedes der beiden Enden des Querrohres jeweils auf einer Verbindungslinie zwischen dem zweiten Gelenk und dem dritten Gelenk des Viergelenks an den beiden zweiten Schwingen befestigt ist.

Eine sehr kostengünstige und gewichtsoptimierte Ausführung sieht vor, dass jedes der beiden Enden des Querrohres unmittelbar an einer der beiden zweiten Schwingen angeschweißt ist. Auf zusätzliche Adapterteile kann so verzichtet werden.

Ein kreisrunder Querschnitt des Querrohres ermöglicht eine kostengünstige Verwendung eines Halbzeuges als Querrohr. Die Erfindung ist jedoch nicht auf einen bestimmten Querschnitt beschränkt. Aus Gründen der Festigkeit können auch offene oder geschlossene Profile mit einem besonders biege- und/oder torsionssteifen Profilquerschnitt zum Einsatz kommen. Unter dem Begriff Querrohr sind daher alle im Fahrzeugsitzbereich an sich bekannten Rohre und Profile zu verstehen.

Die erfindungsgemäße Lösung kann mit den genannten Vorteilen auch in gattungsgemäßen Fahrzeugsitzen eingesetzt werden, die zusätzlich zu dem Viergelenk eine dritte Schwinge aufweisen, die mittels eines unteren Gelenks im vorderen Bereich des Unterbaus an diesem gelenkig angebunden ist und mittels eines oberen Gelenks an einem Sitzkissen gelenkig angebunden ist, wobei das Sitzkissen in der Sitzstellung mittels einer Schließvorrichtung mit der ersten Schwinge verriegelbar ist.

### Figuren und Ausführungsformen der Erfindung

Im Folgenden ist die Erfindung anhand dreier in den Zeichnungen dargestellter Ausführungsbeispiele näher erläutert. Es zeigen
- Fig. 1: eine Seitenansicht des ersten Ausführungsbeispiels in der Sitzstellung,
- Fig. 2: eine Seitenansicht des ersten Ausführungsbeispiels in einer Zwischenstellung,
- Fig. 3: eine Seitenansicht des ersten Ausführungsbeispiels in der Bodenstellung,
- Fig. 4: eine perspektivische Ansicht des Querrohres mit den beiden unteren Anbindungspunkten und dem dritten Anbindungspunkt,
- Fig. 5: eine Fig. 4 entsprechende Ansicht in Explosionsdarstellung,
- Fig. 6: eine Seitenansicht des zweiten Ausführungsbeispiels in der Sitzstellung,
- Fig. 7: eine Seitenansicht des zweiten Ausführungsbeispiels in der Bodenstellung,
- Fig. 8a: eine Seitenansicht des dritten Ausführungsbeispiels in der Sitzstellung und
- Fig. 8b: eine Fig. 8a entsprechende Seitenansicht mit schematisiert dargestellter Stellung der ersten und zweiten Schwinge in Bodenstellung.

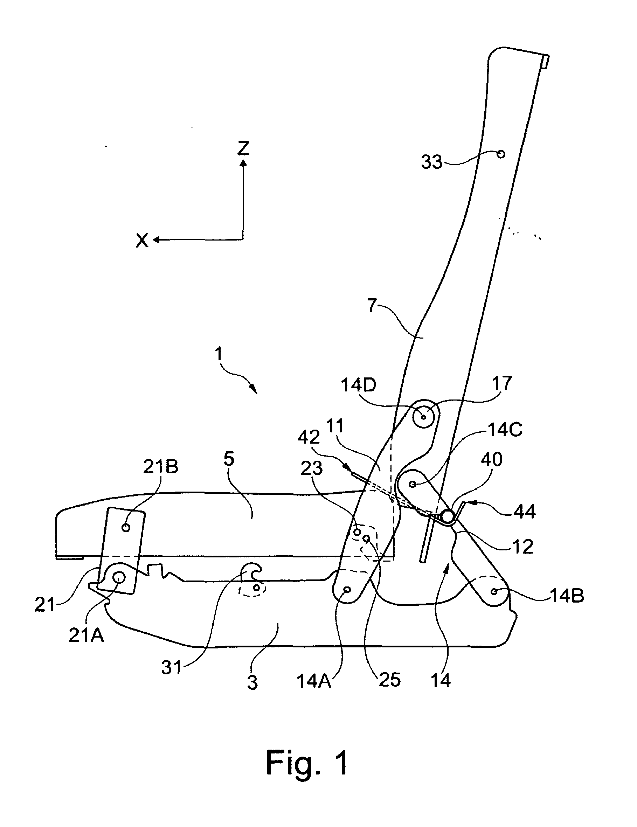

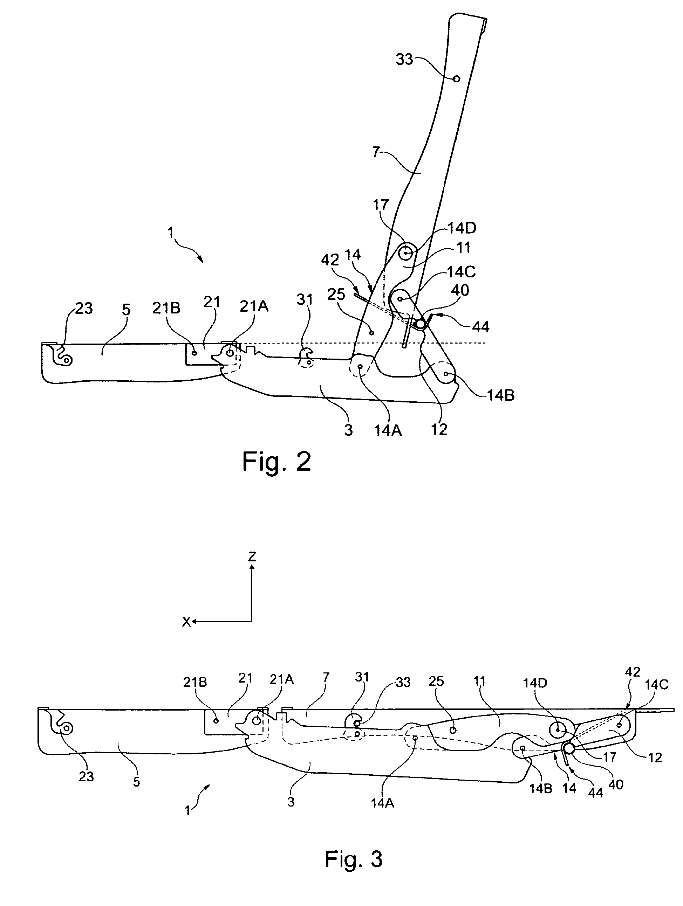

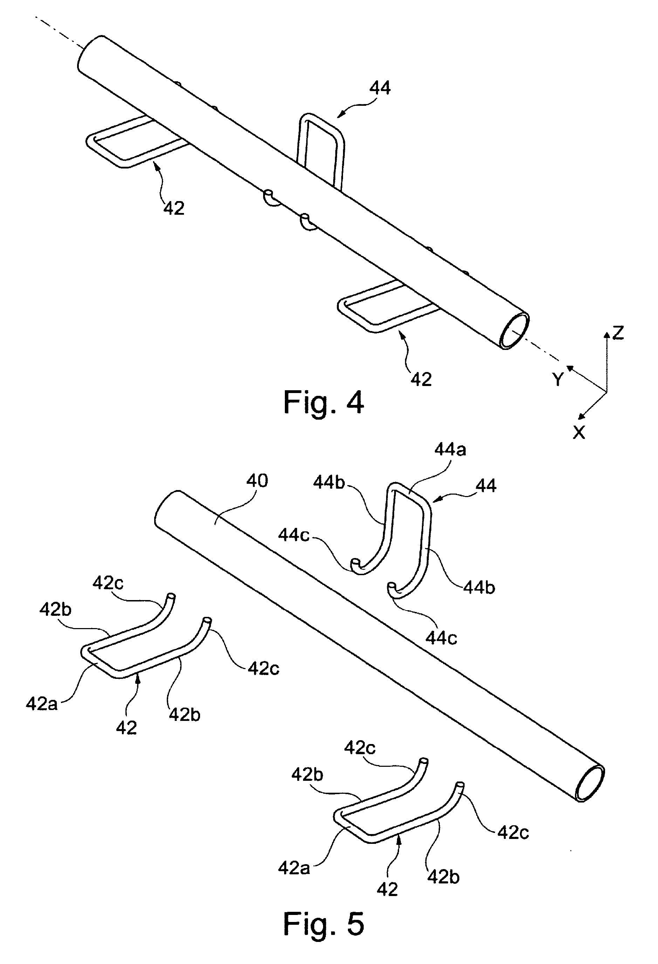

Im ersten Ausführungsbeispiel (Figur 1 bis Figur 5) weist ein Fahrzeugsitz 1 einer hinteren Sitzreihe eines Kraftfahrzeuges einen in den Figuren nicht im Detail dargestellten Unterbau 3 auf. Der Unterbau 3 ist in nicht näher dargestellter Weise mit der Fahrzeugstruktur des Kraftfahrzeuges verbunden, beispielsweise verschraubt und trägt auf eine nachfolgend beschriebene Weise ein Sitzkissen 5 und eine Lehne 7. Von einer in Figur 1 dargestellten einsitzbaren Sitzstellung mit im wesentlichen aufrechter Lehne 7 ist der Fahrzeugsitz 1 durch Vorklappen des Sitzkissens 5 und der Lehne 7 in eine in Figur 3 dargestellte, flache Bodenstellung überführbar, in welcher bei vergrößertem Laderaumvolumen eine ebene Ladefläche, im Folgenden als Ladebodenebene bezeichnet, zur Verfügung steht.

Die Orientierung des Fahrzeugsitzes 1 innerhalb des Kraftfahrzeuges und dessen gewöhnliche Fahrtrichtung definieren die nachfolgend verwendeten Richtungsangaben eines kartesischen Fahrzeugkoordinatensystem, das drei Richtungen x, y und z aufweist. Eine horizontal ausgerichtete Fahrzeuglängsrichtung x verläuft parallel zu der gewöhnlichen Fahrtrichtung des Fahrzeugs. Eine ebenfalls horizontal ausgerichtete Fahrzeugquerrichtung y definiert eine zu der Fahrzeuglängsrichtung x senkrecht verlaufende Richtung. Eine Fahrzeughochachse z steht senkrecht auf den Richtungen x und y und ist nach oben (von der Fahrbahn weg) orientiert. Der Ursprung des Koordinatensystems liegt - in Fahrzeugquerrichtung y gesehen - in der Fahrzeugmitte. Die Angaben "rechts" und "links" beziehen sich auf eine Blickrichtung in Fahrzeuglängsrichtung x, also in Fahrtrichtung. Die Angaben "nach oben" und "nach unten" schließen auch Winkel bis zu 45° zu der Fahrzeughochachse z ein.

Die beiden Fahrzeugsitzseiten des Fahrzeugsitzes 1 sind bezüglich einer Sitzmittelebene, die parallel zu einer durch die Fahrzeuglängsrichtung x und die Fahrzeughochachse z definierten x-z-Ebene in Fahrzeugquerrichtung y gesehen durch die Sitzmitte verläuft, spiegelbildlich aufgebaut. Im Folgenden ist nur die linke Seite des Fahrzeugsitzes 1 beschrieben, dessen Kinematik-Gelenke jeweils beidseitig vorhanden sind und jeweils - parallel zur Fahrzeugquerrichtung y verlaufende - Drehachsen bilden. Die nachfolgend beschriebenen Drehungen um einzelne Gelenke entsprechen somit Drehungen um die jeweils durch das linke und das zugehörige rechte Gelenk gebildete Drehachse.

Wie in Figur 1 dargestellt, ist am hinteren Ende des Unterbaus 3 eine erste Schwinge 11 mittels eines ersten Gelenks 14A und entgegen der Fahrtrichtung dahinter eine zweite Schwinge 12 mittels eines zweiten Gelenks 14B jeweils an einem Schwingenende gelenkig angebunden. Die erste Schwinge 11 und die zweite Schwinge 12 sind jeweils mit ihrem zweiten Ende mittels eines dritten und vierten Gelenks 14C, 14D an der Lehne 7, genauer gesagt an deren Struktur, gelenkig angebunden. Das vierte Gelenk 14D ist als verriegelbarer Beschlag 17, vorliegend als Rastbeschlag ausgebildet. Der Unterbau 3, die beiden Schwingen 11 und 12 und die Lehne 7 definieren mit den jeweiligen Gelenken 14A, 14B, 14C, 14D ein Viergelenk 14, d.h. die Lehne 7 ist mittels dieses Viergelenks 14 am Unterbau 3 gelenkig angebunden.

Am vorderen Ende des Unterbaus 3 ist eine dritte Schwinge 21 an einen von zwei Enden der dritten Schwinge 21 mittels eines unteren Gelenks 21A gelenkig angebunden. Mit ihrem zweiten Ende ist die dritte Schwinge 21 mittels eines oberen Gelenks 21 B am Sitzkissen 5 angebunden, genauer gesagt an dessen Trägerstruktur. Am hinteren Ende des Sitzkissens 5 ist eine erste Schließvorrichtung 23 angebracht, welche in der Sitzstellung einen seitlich von der ersten Schwinge 11 abstehenden ersten Bolzen 25 aufnimmt. Dadurch ist das Sitzkissen 5 in der Sitzstellung mit dem Viergelenk 14 verriegelt.

Zum Übergang in die Bodenstellung wird zunächst die erste Schließvorrichtung 23 geöffnet. Anschließend wird das Sitzkissen 5 mittels einer Drehung der dritten Schwinge 21 um das untere Gelenk 21 A und einer Drehung des Sitzkissens 5 um das obere Gelenk 21 B um insgesamt etwa 180° nach vorne geklappt, bis die feste Unterseite des Sitzkissens 5, wie in den Figuren 2 und 3 dargestellt, nach oben zeigt. Das Umklappen des Sitzkissens 5 kann federunterstützt sein.

Durch Öffnen des Rastbeschlags 17 lässt sich das Viergelenk 14 entriegeln, so dass die Lehne 7 ebenfalls nach vorne geklappt werden kann, bis ihre feste Rückseite, wie in Figur 3 dargestellt, nach oben zeigt. Die erste Schwinge 11 schwenkt dabei um das erste Gelenk 14A, die zweite Schwinge 12 um das zweite Gelenk 14B nach hinten. Der erste Bolzen 25, der in der Zwischenstellung von Figur 2 noch oberhalb der gestrichelt skizzierten Ladebodenebene lag, liegt nun unterhalb dieser durch die harte Rückseite der Lehne 7 definierten Ladebodenebene. Eine am Unterbau 3 vorgesehene zweite Schließvorrichtung 31 nimmt einen zweiten Bolzen 33 auf, welcher vom - in Sitzstellung oberen - Endbereich der Lehne 7 seitlich absteht. Das Sitzkissen 5 liegt beispielsweise auf der Fahrzeugstruktur auf oder ist mittels der ersten Schließvorrichtung 23 mit dieser verriegelt. Durch Schließen des Rastbeschlags 17 lässt sich die Lehne 7 in der flachen Bodenstellung sichern.

Zur Rückkehr in die Sitzstellung wird zunächst durch Öffnen des Rastbeschlags 17 das Viergelenk 14 und somit die Lehne 7 freigegeben, so dass diese in ihre Ausgangsposition geschwenkt werden kann. Dort wird der Rastbeschlag 17 wieder verriegelt. Danach kann das Sitzkissen 5 zurückgeklappt werden.

Bei dem Fahrzeugsitz 1 ist eine weitere Bedienart mit einer Schnellklappung möglich. Hierzu wird die erste Schließvorrichtung 23 verriegelt gelassen, so dass das Sitzkissen 5 mit dem Viergelenk 14 verriegelt bleibt. Wie beim Übergang in die Bodenstellung wird der Rastbeschlag 17 geöffnet und die Lehne 7 nach vorne geklappt. Das Sitzkissen 5 wird dabei durch das Viergelenk 14 nach hinten unten gezogen, wodurch die Lehne 7 auf dem Sitzkissen 5 zu liegen kommt. Diese Endstellung ist allerdings nicht so flach wie die Bodenstellung. Die Rückkehr in die Sitzstellung erfolgt in umgekehrter Reihenfolge der beschriebenen Schritte.

Der Rastbeschlag 17 ermöglicht des Weiteren eine Neigungseinstellung der Lehne 7 zur Steigerung des Sitzkomforts, indem die Neigung individuell an die Bedürfnisse des Insassen angepasst werden kann. Dazu wird wie zuvor beschrieben der Rastbeschlag 17 geöffnet, anschließend die Neigung der Lehne 7 beispielsweise durch Ziehen am oberen Lehnenkopf eingestellt und abschließend der Rastbeschlag 17 wieder verriegelt. Ein sich damit zwangsläufig ergebendes Verstellen des gesamten Viergelenks ist dabei nicht von Nachteil.

Ein der Anbindung eines Kindersitzbefestigungssystems dienendes Querrohr 40 verläuft in Fahrzeugquerrichtung zwischen den beiden zweiten Schwingen 12. Jedes der beiden Enden des Querrohrs 40 ist jeweils an einer der beiden zweiten Schwingen 12 zwischen dem zweiten Gelenk 14B und dem dritten Gelenk 14C angebunden, insbesondere angeschweißt. Das Querrohr 40 hat vorliegend einen kreisrunden Querschnitt, kann jedoch auch beliebig andere Querschnitte aufweisen, wie beispielsweise einen auf eine hohe Biegesteifigkeit optimierten Querschnitt.

In an sich bekannter Weise ist an dem Querrohr 40 in den beiden äußeren Sitzaußenbereichen jeweils ein unterer Bügel 42 als unterer Anbindungspunkt eines ISOFIX-Kindersitzbefestigungssystems angebunden. Jeder der beiden unteren Bügel 42 umfasst einen parallel zur Fahrzeugquerrichtung y ausgerichteten Konnektoraufnahmeabschnitt 42a, an den ein Konnektor eines Kindersitzes befestigt werden kann. Der vom Querrohr 40 beabstandete und linear verlaufende Konnektoraufnahmeabschnitt 42a geht an seinen beiden Enden in jeweils einen vorzugsweise senkrecht zur Fahrzeugquerrichtung y orientierten und linear verlaufenden Armabschnitt 42b über. Im Übergangsbereich zwischen dem Konnektoraufnahmeabschnitt 42a und dem Armabschnitt 42b ist vorzugsweise ein kreisbogenförmiger Radius, insbesondere Biegeradius vorgesehen. An dem vom Konnektoraufnahmeabschnitt 42a abgewandten Ende eines jeden Armabschnitts 42b schließt sich ein kreisbogenförmiger Endabschnitt 42c an. Der Innenradius des Endabschnitts 42c ist annähernd gleich groß wie der Außendurchmesser des Querrohres 40. Der Endabschnitt 42c liegt mit seinem Innenradius am Querrohr 40 an und ist an diesem befestigt, insbesondere mit diesem verschweißt.

Die beiden unteren Bügel 42 ragen in der Sitzstellung durch einen Polsterspalt zwischen dem Sitzkissen 5 und dem Polster der Lehne 7. Während des Übergangs in die Bodenstellung werden die beiden unteren Bügel 42 aus dem Polsterspalt herausgezogen und schwenken mit den zweiten Schwingen 12 mit.

In Fahrzeugquerrichtung y gesehen ungefähr in der Mitte des Fahrzeugsitzes 1 und somit etwa in der Mitte des Querrohres 40, ist ein dritter Anbindungspunkt 44 an dem Querrohr 40 angebunden, insbesondere ein Toptether-Anbindungspunkt des ISOFIX-Kindersitzbefestigungssystems. Der dritte Anbindungspunkt 44 ist ebenfalls als (dritter) Bügel ausgebildet und weist einen ersten Bügelabschnitt 44a zum Zusammenwirken mit einem Toptether eines Kindersitzes auf sowie zwei zweite Bügelabschnitte 44b und zwei dritte Bügelabschnitte 44c. Der geometrische Aufbau des dritten Bügels 44 entspricht dem geometrischen Aufbau der unteren Bügel 42 (der unteren Anbindungs-punkte), wobei der erste Bügelabschnitt 44a dem Konnektoraufnahmeabschnitt 42a, der zweite Bügelabschnitt 44b dem Armabschnitt 42b und der dritte Bügelabschnitt 44c dem Endabschnitt 42c entspricht. Vorzugsweise sind der dritte Bügel 44 und die unteren Bügel 42 Gleichteile oder lediglich die Längen einzelner Abschnitte sind unterschiedlich.

Der dritte Bügels 44 ist gegenüber den beiden unteren Bügeln 42 um die Längsachse des Querrohres 40 verdreht am Querrohr 40 befestigt, so dass der erste Bügelabschnitt 44a in Fahrrichtung gesehen hinter der Lehne 7 positioniert und zugänglich ist.

Die unteren Bügel 42 und der dritte Bügel 44 bestehen vorzugsweise aus einem abgelängten und gebogenen Draht aus Stahlwerkstoff. Der Durchmesser beträgt in bevorzugter Ausführung 6 mm. Die Bügel 42 und 44 können jedoch auch aus anderen Werkstoffen bestehen und/oder mittels anderer Halbzeuge und Fertigungsverfahren hergestellt sein.

Aufgrund der Anbindung der beiden unteren Anbindungspunkte (Bügel) 42 und des dritten Anbindungspunktes (Bügels) 44 an dem Querrohr 40, werden Crashlasten über das Querrohr 40 unmittelbar in die zweiten Schwingen 12 eingeleitet und über die zweiten Schwingen 12 in den Unterbau 3 weitergeleitet. Die Crashlasten werden dadurch nicht über die Lehne 7 geführt und belasten den Beschlag 17 nur wenig. Dieser Effekt ist weitgehend unabhängig von der Geometrie der unteren Anbindungspunkte 42 oder des dritten Anbindungspunktes 44.

In einer Abwandlung des ersten Ausführungsbeispiels ist der Beschlag 17 als Exzenterumlaufgetriebe ausgebildet, welches dem Fachmann auch unter dem Begriff Taumelgetriebe bekannt ist. Das Viergelenk 14 wird dann zwischen der Sitzstellung und der Bodenstellung verstellt, indem der Beschlag 17 in an sich bekannter Weise durch Drehen an einem Handrad oder durch einen Elektromotor verstellt wird.

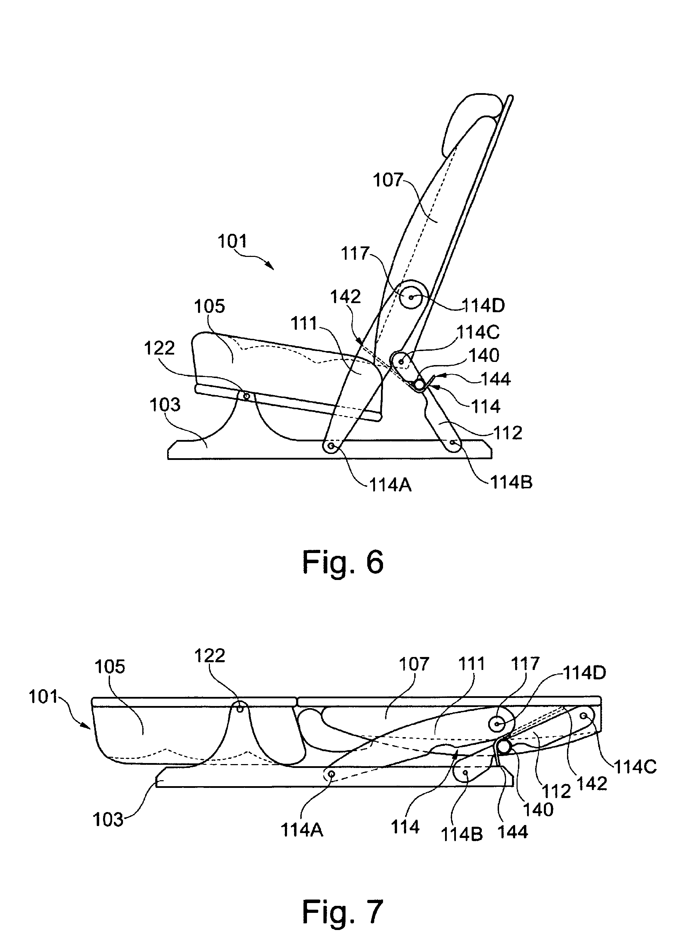

Das zweite Ausführungsbeispiel (Figuren 6 und 7) entspricht dem ersten Ausführungsbeispiel bis auf die nachfolgend beschriebenen Details weitgehend, weshalb gleiche und gleichwirkende Bauteile um 100 höhere Bezugszeichen tragen. Bei diesem Fahrzeugsitz 101 trägt der Unterbau 103 ebenfalls das Sitzkissen 105 und die Lehne 107. Die erste Schwinge 111 und die zweite Schwinge 112 sind ebenfalls unter Bildung eines Viergelenks 114 am Unterbau 103 und an der Lehne 107 gelenkig angebunden. Ein Beschlag 117, insbesondere ein Rastbeschlag oder Getriebebeschlag, bildet dabei das vierte Gelenk 114D zwischen Lehne 107 und erster Schwinge 111. Das Viergelenk 114 ist dadurch gesperrt, und die Lehne 107 wird sicher gehalten. Das Sitzkissen 105 ist mittels eines in seinem vorderen Drittel angeordneten Gelenks 122 an einer hochgezogenen Materialpartie des Unterbaus 103 gelenkig angebunden.

Zum Übergang in die Bodenstellung wird das Sitzkissen 105 um das Gelenk 122 um etwa 180° nach vorne geklappt und dann der Beschlag 117 entriegelt. Die Lehne 107 kann nun ebenfalls nach vorne geklappt werden, wobei bei Erreichen der Bodenstellung die Lehne 107 auf der zweiten Schwinge 112 zu liegen kommt und durch diese abgestützt wird, d.h. die Ladebodenbelastung der Lehne 107 wird von der zweiten Schwinge 112 zumindest teilweise aufgenommen. Die Rückkehr in die Sitzstellung erfolgt in umgekehrter Reihenfolge. Die beim ersten Ausführungsbeispiel genannte weitere Bedienart ist auch beim zweiten Ausführungsbeispiel möglich.

Auch das zweite Ausführungsbeispiel weist ein der Anbindung eines Kindersitzbefestigungssystems dienendes Querrohr 140 auf, das parallel zur Fahrzeugquerrichtung y zwischen den beiden zweiten Schwingen 112 verläuft. Jedes der beiden Enden des Querrohrs 140 ist jeweils an einer der beiden zweiten Schwingen 112, insbesondere zwischen dem zweiten Gelenk 114B und dem dritten Gelenk 114C, angebunden, vorliegend angeschweißt. Das Querrohr 140 hat vorliegend einen kreisrunden Querschnitt, kann jedoch auch beliebig andere Querschnitte aufweisen.

In an sich bekannter Weise ist an dem Querrohr 140 in den beiden äußeren Sitzaußenbereichen jeweils ein unterer Bügel 142 als unterer Anbindungspunkt eines ISOFIX-Kindersitzbefestigungssystems angebunden. In der Rohrmitte ist ein dritter Bügel 144 angebunden, insbesondere ein Toptether-Anbindungspunkt des ISOFIX-Kindersitzbefestigungssystems. Der Aufbau der unteren Bügel 142 und des dritten Bügels 144 entspricht dem Aufbau der jeweiligen Bügel des ersten Ausführungsbeispiels.

In Abwandlungen des ersten und zweiten Ausführungsbeispiels bildet der Beschlag nicht das vierte Gelenk, sondern das dritte Gelenk des Viergelenks, mittels dessen die hintere Schwinge an der Lehne gelenkig angebunden ist. Die Funktionsweise bezüglich der Lehnenneigungseinstellung und der Einnahme der Bodenstellung ist entsprechend.

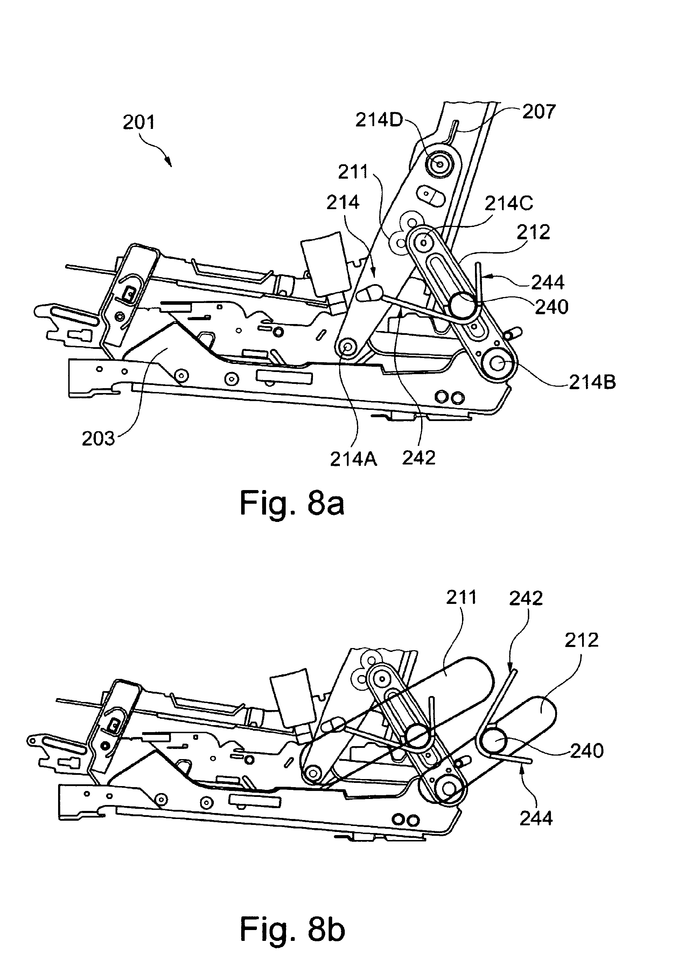

Das dritte Ausführungsbeispiel (Figuren 8a und 8b) entspricht dem ersten Ausführungsbeispiel bis auf die nachfolgend beschriebenen Details weitgehend, weshalb gleiche und gleichwirkende Bauteile um 200 höhere Bezugszeichen tragen. Bei diesem Fahrzeugsitz 201 wird das Viergelenk 214 in der Sitzstellung nicht über einen in einem Gelenk (214A, 214B, 214C, 214D) angeordneten Beschlag, sondern mittels eines nicht dargestellten Drehfallenschlosses, das zwischen der ersten Schwinge 211 und der zweiten Schwinge 212 wirkt, verriegelt. Dazu ist das Drehfallenschloss an der ersten Schwinge 211 befestigt und nimmt in an sich bekannter Weise ein an der zweiten Schwinge 212 befestigtes Gegenelement - vorliegend einen Verriegelungsbügel - in der Drehfalle formschlüssig auf. Zum Entriegeln der Sitzstellung wird das Drehfallenschloss entriegelt und das Gegenelement kann die Drehfalle verlassen.

Auch das dritte Ausführungsbeispiel weist ein der Anbindung eines Kindersitzbefestigungssystems dienendes Querrohr 240 auf, das parallel zur Fahrzeugquerrichtung y zwischen den beiden zweiten Schwingen 212 verläuft. Jedes der beiden Enden des Querrohrs 240 ist jeweils an einer der beiden zweiten Schwingen 212 zwischen dem zweiten Gelenk 214B und dem dritten Gelenk 214C angebunden, vorliegend angeschweißt. Das Querrohr 240 hat vorliegend einen kreisrunden Querschnitt, kann jedoch auch beliebig andere Querschnitte aufweisen.

In an sich bekannter Weise ist an dem Querrohr 240 in den beiden äußeren Sitzaußenbereichen jeweils ein unterer Bügel 242 als unterer Anbindungspunkt eines ISOFIX-Kindersitzbefestigungssystems angebunden. In der Rohrmitte ist ein dritter Bügel 244 als dritter Anbindungspunkt angebunden, insbesondere ein Toptether-Anbindungspunkt des ISOFIX-Kindersitzbefestigungssystems. Der Aufbau der unteren Bügel 242 und des dritten Bügels 244 entspricht dem Aufbau der jeweiligen Bügel des ersten Ausführungsbeispiels.

### Bezugszeichenliste

- 1, 101, 201: Fahrzeugsitz
- 3, 103, 203: Unterbau
- 5, 105,: Sitzkissen
- 7, 107, 207: Lehne
- 11, 111, 211: erste Schwinge
- 12, 112, 212: zweite Schwinge
- 14, 114, 214: Viergelenk
- 14A, 114A, 214A: erstes Gelenk
- 14B, 114B, 214B: zweites Gelenk
- 14C, 114C, 214C: drittes Gelenk
- 14D, 114D, 214D: viertes Gelenk
- 17, 117: Beschlag
- 21: dritte Schwinge
- 21 A: unteres Gelenk
- 21 B: oberes Gelenk
- 23: erste Schließvorrichtung
- 25: erster Bolzen
- 31: zweite Schließvorrichtung
- 33: zweiter Bolzen
- 40, 140, 240: Querrohr
- 42, 142, 242: unterer Anbindungspunkt, unterer Bügel
- 42a: Konnektoraufnahmeabschnitt
- 42b,: Armabschnitt
- 42c,: Endabschnitt
- 44, 144, 244: dritter Anbindungspunkt, dritter Bügel
- 44a: erster Bügelabschnitt
- 44b: zweiter Bügelabschnitt
- 44c: dritter Bügelabschnitt
- 122: Gelenk
- x: Fahrzeuglängsrichtung
- y: Fahrzeugquerrichtung
- z: Fahrzeughochachse

## Patentansprüche

1. Fahrzeugsitz, insbesondere Kraftfahrzeugsitz, mit einem Unterbau (3; 103, 203) und einer an dem Unterbau (3; 103, 203) gelenkig angebrachten Lehne (7; 107, 207), wobei der Fahrzeugsitz (1; 101, 201) durch Vorklappen der Lehne (7; 107, 207) von einer Sitzstellung in eine Bodenstellung überführbar ist und zur Anlenkung der Lehne (7; 107, 207) an den Unterbau (3; 103, 203) auf beiden Sitzaußenseiten jeweils eine erste Schwinge (11; 111, 211) und jeweils eine zweite Schwinge (12; 112, 212) vorgesehen sind, wobei der Unterbau (3; 103, 203), die jeweils erste Schwinge (11; 111, 211), die Lehne (7; 107, 207) und die jeweils zweite Schwinge (12; 112, 212) als vier über Gelenke (14A, 114A, 214A, 14B, 114B, 214B, 14C, 114C, 214C, 14D, 114D, 214D) miteinander verbundene Getriebeglieder jeweils ein Viergelenk (14; 114, 214) definieren, wobei jede der beiden zweiten Schwingen (12, 112, 212) mittels jeweils eines zweiten Gelenks (14B, 114B, 214B) mit dem Unterbau (3, 103, 203) und mittels jeweils eines dritten Gelenks (14C, 114C, 214C) mit der Lehne (7, 107, 207) drehbar verbunden sind,
**dadurch gekennzeichnet, dass**
zwischen den beiden zweiten Schwingen (12, 112, 212) ein Querrohr (40, 140, 240) in Fahrzeugquerrichtung (y) verläuft, das Querrohr (40, 140, 240) zwei Enden aufweist und jedes dieser beiden Enden jeweils in einem Bereich zwischen dem zweiten Gelenk (14B, 114B, 214B) und dem dritten Gelenk (14C, 114C, 214C) an der zugehörigen zweiten Schwinge (12, 112, 212) befestigt ist und dass jedes der beiden Enden des Querrohres (40, 140, 240) auf einer Verbindungslinie zwischen dem zweiten Gelenk (14B, 114B, 214B) und dem dritten Gelenk (14C, 114C, 214C) des Viergelenks (14, 114, 214) an einer der beiden zweiten Schwingen (12, 112, 212) befestigt ist, wobei an dem Querrohr (40, 140, 240) mindestens ein Anbindungspunkt (42, 142, 242, 44, 144, 244) eines Kindersitzbefestigungssystems vorgesehen ist.

2. Fahrzeugsitz nach Anspruch 1, **dadurch gekennzeichnet, dass** an dem Querrohr (40, 140, 240) zwei untere Anbindungspunkte (42, 142, 242) eines ISOFIX-Kindersitzbefestigungssystems vorgesehen sind.

3. Fahrzeugsitz nach Anspruch 2, **dadurch gekennzeichnet, dass** die beiden unteren Anbindungspunkte (42, 142, 242) als im Wesentlichen U-förmige untere Bügel ausgebildet sind.

4. Fahrzeugsitz nach Anspruch 2, **dadurch gekennzeichnet, dass** die unteren Bügel (42, 142, 242) aus gebogenem Draht sind.

5. Fahrzeugsitz nach einem der Anspruch 3 oder 4, **dadurch gekennzeichnet, dass** jeder der beiden unteren Bügel (42, 142, 242) einen parallel zur Fahrzeugquerrichtung (y) verlaufenden Konnektoraufnahmeabschnitt (42a), zwei mit dem Konnektoraufnahmeabschnitt (42a) verbundene Armabschnitte (42b) und zwei jeweils mit einem der Armabschnitte (42b) verbundene Endabschnitte (42c) umfasst, und die Endabschnitte (42c) an dem Querrohr (40, 140, 240) befestigt sind.

6. Fahrzeugsitz nach Anspruch 5, **dadurch gekennzeichnet, dass** mindestens einer der Armabschnitte (42b) kreisbogenförmig gestaltet ist und das Querrohr (40, 140, 240) zumindest teilweise formschlüssig umgreift.

7. Fahrzeugsitz nach einem der Ansprüche 2 bis 6, **dadurch gekennzeichnet, dass** an dem Querrohr (40, 140, 240) ein dritter Anbindungspunkt (44, 144, 244) vorgesehen ist.

8. Fahrzeugsitz nach Anspruch 7, **dadurch gekennzeichnet, dass** der dritte Anbindungspunkt (44, 144, 244) für eine Toptether-Befestigung eines ISOFIX-Kindersitzbefestigungssystems vorgesehen ist.

9. Fahrzeugsitz nach Anspruch 8, **dadurch gekennzeichnet, dass** der dritte Anbindungspunkt (44, 144, 244) als ein im Wesentlichen U-förmiger dritter Bügel ausgebildet ist.

10. Fahrzeugsitz nach Anspruch 9, **dadurch gekennzeichnet, dass** der dritte Bügel (44, 144, 244) aus gebogenem Draht gebildet ist.

11. Fahrzeugsitz nach einem der Ansprüche 1 bis 10, **dadurch gekennzeichnet, dass** jedes der beiden Enden des Querrohres (40, 140, 240) unmittelbar an einer der beiden zweiten Schwingen (12, 112, 212) angeschweißt ist.

12. Fahrzeugsitz nach einem der Ansprüche 1 bis 11, **dadurch gekennzeichnet, dass** das Querrohr (40) einen kreisrunden Querschnitt aufweist.

13. Fahrzeugsitz nach einem der Ansprüche 1 bis 12, **dadurch gekennzeichnet, dass** eine dritte Schwinge (21) mittels eines unteren Gelenks (21A) im vorderen Bereich des Unterbaus (3) an dem Unterbau (3) gelenkig angebunden ist und die dritte Schwinge (21) mittels eines oberen Gelenks (21 B) an einem Sitzkissen (5) gelenkig angebunden ist.

14. Fahrzeugsitz nach Anspruch 13, **dadurch gekennzeichnet, dass** das Sitzkissen (5) in der Sitzstellung mittels einer Schließvorrichtung (23) mit der ersten Schwinge (11) verriegelbar ist.

## Claims

1. Vehicle seat, in particular motor vehicle seat, with a substructure (3; 103, 203) and a backrest (7; 107, 207) which is attached to the substructure (3; 103, 203) in an articulated manner, wherein the vehicle seat (1; 101, 201) is transferable from a seat position into a floor position by folding the backrest (7; 107, 207) forward, and a respective first rocker (11; 111, 211) and a respective second rocker (12; 112, 212) are provided on the two outer sides of the seat in order to couple the backrest (7; 107, 207) to the substructure (3; 103, 203), wherein the substructure (3; 103, 203), the respective first rocker (11; 111, 211), the backrest (7; 107, 207) and the respective second rocker (12; 112, 212) as four gearing members which are connected to one another via joints (14A, 114A, 214A, 14B, 114B, 214B, 14C, 114C, 214C, 14D, 114D, 214D) in each case define a four-bar linkage (14; 114, 214), wherein each of the two second rockers (12, 112, 212) are connected rotatably to the substructure (3, 103, 203) by means of a respective second joint (14B, 114B, 214B) and are connected rotatably to the backrest (7, 107, 207) by means of a respective third joint (14C, 114C, 214C), **characterized in that** a transverse tube (40, 140, 240) runs in the transverse vehicle direction (y) between the two second rockers (12, 112, 212), the transverse tube (40, 140, 240) has two ends, and each of said two ends is fastened to the associated second rocker (12, 112, 212) in each case in a region between the second joint (14B, 114B, 214B) and the third joint (14C, 114C, 214C) and **in that** each of the two ends of the transverse tube (40, 140, 240) is fastened to one of the two second rockers (12, 112, 212) on a connecting line between the second joint (14B, 114B, 214B) and the third joint (14C, 114C, 214C) of the four-bar linkage (14, 114, 214), wherein at least one attachment point (42, 142, 242, 44, 144, 244) of a child seat fastening system is provided on the transverse tube (40, 140, 240).

2. Vehicle seat according to Claim 1, **characterized in that** two lower attachment points (42, 142, 242) of an ISOFIX child seat fastening system are provided on the transverse tube (40, 140, 240).

3. Vehicle seat according to Claim 2, **characterized in that** the two lower attachment points (42, 142, 242) are designed as substantially U-shaped lower clips.

4. Vehicle seat according to Claim 2, **characterized in that** the lower clips (42, 142, 242) are made from bent wire.

5. Vehicle seat according to either of Claims 3 and 4, **characterized in that** each of the two lower clips (42, 142, 242) comprises a connector receiving section (42a) running parallel to the transverse vehicle direction (y), two arm sections (42b) connected to the connector receiving section (42a) and two end sections (42c) connected in each case to one of the arm sections (42b), and the end sections (42c) are fastened to the transverse tube (40, 140, 240).

6. Vehicle seat according to Claim 5, **characterized in that** at least one of the arm sections (42b) is of circular-arc-shaped design and engages around the transverse tube (40, 140, 240) at least partially in a form-fitting manner.

7. Vehicle seat according to one of Claims 2 to 6, **characterized in that** a third attachment point (44, 144, 244) is provided on the transverse tube (40, 140, 240).

8. Vehicle seat according to Claim 7, **characterized in that** the third attachment point (44, 144, 244) is provided for a top tether fastening of an ISOFIX child seat fastening system.

9. Vehicle seat according to Claim 8, **characterized in that** the third attachment point (44, 144, 244) is designed as a substantially U-shaped third clip.

10. Vehicle seat according to Claim 9, **characterized in that** the third clip (44, 144, 244) is formed from bent wire.

11. Vehicle seat according to one of Claims 1 to 10, **characterized in that** each of the two ends of the transverse tube (40, 140, 240) is welded directly to one of the two second rockers (12, 112, 212).

12. Vehicle seat according to one of Claims 1 to 11, **characterized in that** the transverse tube (40) has a circular cross section.

13. Vehicle seat according to one of Claims 1 to 12, **characterized in that** a third rocker (21) is attached in an articulated manner to the substructure (3) in the front region of the substructure (3) by means of a lower joint (21A) and the third rocker (21) is connected in an articulated manner to a seat cushion (5) by means of an upper joint (21B).

14. Vehicle seat according to Claim 13, **characterized in that** the seat cushion (5) is lockable to the first rocker (11) in the seat position by means of a locking device (23).

## Revendications

1. Siège de véhicule, en particulier siège de véhicule automobile, comprenant un châssis (3 ; 103, 203) et un dossier (7 ; 107, 207) monté de manière articulée sur le châssis (3 ; 103, 203), le siège de véhicule (1 ; 101, 201), par rabattement du dossier (7 ; 107, 207), pouvant être transféré d'une position siège dans une position couchée et à chaque fois un premier bras de levier (11 ; 111, 211) et à chaque fois un deuxième bras de levier (12 ; 112, 212) étant prévus sur les deux côtés extérieurs du siège pour l'articulation du dossier (7 ; 107, 207) au châssis (3 ; 103, 203), le châssis (3 ; 103, 203), le premier bras de levier respectif (11 ; 111, 211), le dossier (7 ; 107, 207) et le deuxième bras de levier respectif (12 ; 112, 212), sous forme de quatre organes de transmission connectés les uns aux autres par le biais d'articulations (14A, 114A, 214A, 14B, 114B, 214B, 14C, 114C, 214C, 14D, 114D, 214D), définissant à chaque fois un quadrilatère articulé (14 ; 114, 214), chacun des deux bras de levier (12, 112, 212) étant connecté à rotation respective au moyen d'une deuxième articulation (14B, 114B, 214B) au châssis (3, 103, 203) et au moyen d'une troisième articulation respective (14C, 114C, 214C) au dossier (7, 107, 207),
**caractérisé en ce**
**qu'**entre les deux deuxièmes bras de levier (12, 112, 212) s'étend un tube transversal (40, 140, 240) dans la direction transversale du véhicule (y), le tube transversal (40, 140, 240) présente deux extrémités et chacune de ces deux extrémités est fixée à chaque fois dans une région entre la deuxième articulation (14B, 114B, 214B) et la troisième articulation (14C, 114C, 214C) au deuxième bras de levier associé (12, 112, 212), et en ce que chacune des deux extrémités du tube transversal (40, 140, 240) est fixée sur une ligne de connexion entre la deuxième articulation (14B, 114B, 214B) et la troisième articulation (14C, 114C, 214C) du quadrilatère articulé (14, 114, 214) à l'un des deux deuxièmes bras de levier (12, 112, 212), au moins un point de liaison (42, 142, 242, 44, 144, 244) d'un système de fixation de siège pour enfant étant prévu au niveau du tube transversal (40, 140, 240).

2. Siège de véhicule selon la revendication 1, **caractérisé en ce que** deux points de liaison inférieurs (42, 142, 242) d'un système de fixation de siège pour enfant ISOFIX sont prévus au niveau du tube transversal (40, 140, 240).

3. Siège de véhicule selon la revendication 2, **caractérisé en ce que** les deux points de liaison inférieurs (42, 142, 242) sont réalisés sous forme d'étriers inférieurs substantiellement en forme de U.

4. Siège de véhicule selon la revendication 2, **caractérisé en ce que** les étriers inférieurs (42, 142, 242) sont réalisés à partir d'un fil métallique cintré.

5. Siège de véhicule selon l'une quelconque des revendications 3 ou 4, **caractérisé en ce que** chacun des deux étriers inférieurs (42, 142, 242) comprend une portion de réception de connecteur (42a) s'étendant parallèlement à la direction transversale du véhicule (y), deux portions de bras (42b) connectées à la portion de réception de connecteur (42a) et deux portions d'extrémité (42c) connectées respectivement à l'une des portions de bras (42b), et les portions d'extrémité (42c) sont fixées au tube transversal (40, 140, 240).

6. Siège de véhicule selon la revendication 5, **caractérisé en ce qu'**au moins l'une des portions de bras (42b) est configurée en forme d'arc de cercle et vient en prise par engagement par correspondance géométrique au moins en partie autour du tube transversal (40, 140, 240).

7. Siège de véhicule selon l'une quelconque des revendications 2 à 6, **caractérisé en ce qu'**un troisième point de liaison (44, 144, 244) est prévu au niveau du tube transversal (40, 140, 240).

8. Siège de véhicule selon la revendication 7, **caractérisé en ce que** le troisième point de liaison (44, 144, 244) est prévu pour une fixation TopTether d'un système de fixation de siège pour enfant ISOFIX.

9. Siège de véhicule selon la revendication 8, **caractérisé en ce que** le troisième point de liaison (44, 144, 244) est réalisé sous forme de troisième étrier substantiellement en forme de U.

10. Siège de véhicule selon la revendication 9, **caractérisé en ce que** le troisième étrier (44, 144, 244) est réalisé à partir d'un fil métallique cintré.

11. Siège de véhicule selon l'une quelconque des revendications 1 à 10, **caractérisé en ce que** chacune des deux extrémités du tube transversal (40, 140, 240) est soudée directement à l'un des deux deuxièmes bras de levier (12, 112, 212).

12. Siège de véhicule selon l'une quelconque des revendications 1 à 11, **caractérisé en ce que** le tube transversal (40) présente une section transversale ronde circulaire.

13. Siège de véhicule selon l'une quelconque des revendications 1 à 12, **caractérisé en ce qu'**un troisième bras de levier (21) est relié au châssis (3) de manière articulée au moyen d'une articulation inférieure (21A) dans la région avant du châssis (3) et le troisième bras de levier (21) est relié à un coussin de siège (5) de manière articulée au moyen d'une articulation supérieure (21B).

14. Siège de véhicule selon la revendication 13, **caractérisé en ce que** le coussin de siège (5), dans la position siège, peut être verrouillé au moyen d'un dispositif de fermeture (23) au premier bras de levier (11).
